# EUROPÄISCHE PATENTANMELDUNG

(11) **EP 1 430 967 A1**
(43) Veröffentlichungstag der Anmeldung: **23.06.2004**
(21) Anmeldenummer: 03025956.8
(22) Anmeldetag: 13.11.2003
(51) Int. Cl.: B21D 37/14, B30B 15/02, B29C 45/17

(54) **Bereitstellungsvorrichtung für zweiteilige Werkzeuge**

(30) Priorität: 20.12.2002 DE 10259888
(71) Anmelder: Fischer Werkzeug- und Maschinenbau GmbH, 79346 Endingen (DE)
(72) Erfinder: Fischer, Eberhard, 79346 Endingen-Amoltern (DE)
(74) Vertreter: Goy, Wolfgang, Dipl.-Phys.

(57) **Zusammenfassung**

Eine Vorrichtung zum Bereitstellen von zweiteiligen Werkzeugen 1 für Arbeiten an diesen Werkzeugen 1 außerhalb der Werkzeugmaschine weist einen Auflagetisch 2 für das Werkzeug 1 auf, auf dem dieses Werkzeug 1 zentriert anordenbar ist. Oberhalb des Auflagetisches 2 befindet sich ein vertikal verfahrbarer Hebetisch 4. Zum Trennen der beiden Werkzeughälften 1', 1" wird die obere Werkzeughälfte 1" mit dem Hebetisch 4 verbunden und dieser anschließend nach oben verfahren. Anschließend wird der Auflagetisch 2 aus dem Portal herausgefahren und sowohl der Auflagetisch 2 als auch der Hebetisch 4 gekippt. Das Zusammensetzen der beiden Werkzeughälften 1', 1" erfolgt in der umgekehrten Reihenfolge.

## Beschreibung

Die Erfindung betrifft eine Vorrichtung zum Bereitstellen von zweiteiligen Werkzeugen für Arbeiten an diesen Werkzeugen außerhalb der Werkzeugmaschine.

Wenn im Nachfolgenden von "Werkzeugen" gesprochen wird, so sind darunter alle Arten von zweiteiligen Werkzeugen, Vorrichtungen sowie allgemeine Maschinenbauteile zu verstehen.

Ein Anwendungsgebiet der erfindungsgemäßen Vorrichtung sind sogenannte Folgeverbundwerkzeuge für die Umformtechnik in der spanlosen Metallverarbeitung. Diese Folgeverbundwerkzeuge führen verschiedene Arbeitsgänge durch, wie beispielsweise Schneiden, Stanzen, Biegen, Tiefziehen, Nieten sowie wie Gewindeformen in einem einzigen Werkzeug. Diese Folgeverbundwerkzeuge zur Herstellung von Stanz-, Zieh- und Biegeteilen sind vom Aufbau her immer zweiteilig, d. h. das Werkzeug besitzt ein Werkzeugunterteil, welches auf dem Pressentisch aufgespannt wird, sowie ein Werkzeugoberteil, das an dem beweglichen Stößel der Presse befestigt wird. Die Presse (diese kann hydraulisch oder mechanisch arbeiten) bewegt das Werkzeugoberteil auf und ab. Ein synchron geschalteter Vorschub taktet den Blechstreifen durch das Werkzeug, wobei die gewünschte Formgebung ausgeformt wird.

Ein weiteres Anwendungsgebiet der erfindungsgemäßen Vorrichtung sind die zweiteiligen Werkzeuge in der Kunststoffspritzgießtechnik. Auch hier sind zwei Werkzeughälften vorgesehen. Im geschlossenen Zustand dieser beiden Werkzeughälften wird die heiße, viskose Kunststoffmasse in das Werkzeug eingespritzt, um so bestimmte Kunststofformteile zu schaffen.

Weitere Anwendungsgebiete für zweiteilige Bauteile sind denkbar.

Bei der Werkzeugmontage, bei der Werkzeugwartung sowie bei der Werkzeugreparatur und bei Testläufen muß das Werkzeug immer wieder getrennt werden, damit die beiden Werkzeughälften einzeln zugänglich sind. Im einfachsten Falle wird dies mit einem Kran oder mit der Presse selbst durchgeführt. Dies kann auch mit Hilfe von hydraulischen Hebezeugen erfolgen.

Da die Werkzeuge mit sehr genauen Säulenführungen ausgestattet sind und diese nur parallele Bewegungen zulassen, kommt es sehr häufig zum Verkanten der beiden Werkzeughälften. Dies kann sowohl beim Trennen als auch beim Zusammenfügen der beiden Werkzeughälften auftreten. Dieser Umstand kann zu Schädigungen im Werkzeug führen. Mit steigendem Gewicht und mit exzentrischem Schwerpunkt erhöht sich diese Gefahr. Schließlich besteht eine nicht unerhebliche Unfallgefahr.

Davon ausgehend liegt der Erfindung die **Aufgabe** zugrunde, eine Vorrichtung zum Bereitstellen von zweiteiligen Werkzeugen für Arbeiten an diesen Werkzeugen außerhalb der Werkzeugmaschine zu schaffen, bei dem beim Trennen sowie beim Zusammenfügen der beiden Werkzeughälften keine Schäden auftreten können.

Die technische **Lösung** ist gekennzeichnet durch die Merkmale im Kennzeichen des Anspruchs 1.

Dadurch ist ein Werkzeugöffnungssystem geschaffen, mit dem sich Werkzeuge unabhängig von Größe, Gewicht und Schwerpunktslage exakt trennen und wieder zusammenfügen lassen. Die Grundidee dabei liegt darin, daß das komplette Werkzeug, also im zusammengeführten Zustand der beiden Werkzeughälften, auf den Auflagetisch aufgesetzt wird. Durch ein Positionierungssystem wird dabei das Werkzeug in eine definierte Position gebracht. Dieses Positionierungssystem erlaubt bei zerlegtem Werkzeug eine paßgenaue Ausrichtung der beiden Werkzeughälften, was für das spätere Zusammensetzen grundlegend ist. Denn oberhalb des Auflagetisches ist ein zweiter Tisch vorgesehen, nämlich ein Hebetisch. Dieser wird von oben auf die obere Werkzeughälfte des auf dem Auflagetisch befindlichen Werkzeugs nach unten verfahren und in Kontakt mit der oberen Seite dieser oberen Werkzeughälfte gebracht. Auch hier erfolgt wieder eine Positionierung in eine definierte Position, in der die obere Werkzeughälfte an der Hubeinheit fixiert wird. Anschließend kann der Auflagetisch mittels der Hubeinheit nach oben verfahren werden, so daß die beiden Werkzeughälften voneinander getrennt und damit einzeln zugänglich sind. Die Werkzeuge können dabei in beliebiger Reihenfolge getrennt und wieder zusammengefügt werden, da die Wiederholgenauigkeit des Positionierungssystems dies zuläßt. Insgesamt ist somit mit der erfindungsgemäßen Vorrichtung eine Möglichkeit geschaffen, beide Werkzeughälften eines Werkzeugs voneinander zu trennen und anschließend wieder exakt zusammenzuführen, ohne daß es zu Beschädigungen am Werkzeug kommen kann. Dies kann von nur einer einzigen Person problemlos durchgeführt werden. Schließlich hat das Werkzeugöffnungssystem der Erfindung den Vorteil der Unfallverhütung und dient somit insgesamt auch der Sicherheit.

Die Weiterbildung gemäß Anspruch 2 hat den Vorteil, daß nach dem Aufsetzen des kompletten Werkzeugs auf den Auflagetisch das Werkzeug problemlos von Hand in die vorgegebene Zentrierposition verschoben werden kann. Bei den Gleitelementen kann es sich beispielsweise um gefederte Kugeldruckstücke handeln, welche über die Oberseite des Auflagetisches ragen.

Eine bevorzugte Weiterbildung schlägt gemäß Anspruch 3 vor, daß der Auflagetisch in der Horizontalen linear verfahrbar ist. Hierzu kann ein Schlitten dienen, der auf Schienen verfahrbar ist und auf dem der Auflagetisch befestigt ist. Der Vorteil in der Verschiebbarkeit des Auflagetisches besteht darin, daß die beiden Werkzeughälften sehr gut zugänglich sind. Die Grundidee besteht dabei darin, daß in der Ausgangsposition des Auflagetisches dieser sich nicht unterhalb des Hebetisches befindet, sondern daß er herausgefahren ist. Dadurch kann das komplette Werkzeug problemlos auf dem Auflagetisch abgesetzt werden. Anschließend wird der Auflagetisch unterhalb des Hebetisches gefahren, so daß dann die Trennung der beiden Werkzeughälften erfolgen kann. Danach wird dann der Auflagetisch wieder in die Ausgangsposition zurückgefahren, so daß die untere Werkzeughälfte frei zugänglich ist, ebenso die obere Werkzeughälfte, welche an dem Hebetisch hängt.

Eine weitere bevorzugte Weiterbildung schlägt gemäß Anspruch 4 vor, daß der Auflagetisch um eine horizontale Achse verschwenkbar ist. Zum Verschwenken kann ein Drehsystem beispielsweise mittels einer Gewinde-Hub-Einheit dienen. Vorzugsweise ist dabei der Auflagetisch stufenlos drehbar bzw. kippbar. Der Vorteil dieses Drehsystems besteht darin, daß die untere Werkzeughälfte hin zur Bearbeitungsperson gekippt werden kann und diese die an der unteren Werkzeughälfte auszuführenden Arbeiten vom ergonomischen Standpunkt her besser durchführen kann. Ein weiterer Vorteil besteht darin, daß für den Fall, daß die Werkzeughälfte beispielsweise mittels eines Krans an Seilen aufgehängt wird, um sie vom Auflagetisch zu entnehmen, sich die Werkzeughälfte schon weitestgehend in der endgültigen Kippstellung befindet.

Die Weiterbildung gemäß Anspruch 5 schafft eine kompakte Anordnung der Gesamtvorrichtung, indem der Auflagetisch unterhalb des Portals verfahrbar ist. Insbesondere ist durch die Portalausbildung des Hebetisches eine einfache Möglichkeit geschaffen, um diesen Hebetisch zu heben und zu senken.

Eine weitere bevorzugte Weiterbildung schlägt Anspruch 6 vor, indem der Hebetisch um eine horizontale Achse drehbar ist. Damit ist ein Drehsystem für den Hebetisch geschaffen, um so die obere Werkzeughälfte in eine ergonomisch günstige Bearbeitungsposition überzuführen. Auch hier ist vorzugsweise eine stufenlose Drehbewegung um maximal 180° möglich. Darüber hinaus kann - wie zuvor bereits im Zusammenhang mit dem Auflagetisch beschrieben - bei der Entnahme der Werkzeughälfte vom Hebetisch bereits eine Vorkippung eingeleitet werden.

Schließlich schlägt die Weiterbildung gemäß Anspruch 7 ein Positionierungssystem für die Werkzeughälfte(n) für eine exakte Zentrierung dieser Werkzeughälften vor. Die Grundidee besteht darin, daß beispielsweise bei der Positioniereinrichtung des Auflagetisches zunächst eine Zentrierung längs der Zentriernut erfolgt, indem die federbeaufschlagten Bolzen in diese Zentriernut einrasten, wenn sie die entsprechende Position eingenommen haben. Anschließend kann das Werkzeug längs der Zentriernut verschoben werden, bis das Werkzeug in Kontakt mit einem Anschlag gelangt. In dieser Position kann dann eine Verriegelung der Werkzeughälfte an dem Tisch erfolgen.

Ein Ausführungsbeispiel einer erfindungsgemäßen Vorrichtung zum Bereitstellen von zweiteiligen Werkzeugen für Arbeiten an diesen Werkzeugen außerhalb der Werkzeugmaschine wird nachfolgend anhand der Zeichnungen beschrieben. In diesen zeigt:
- Fig. 1: eine Seitenansicht des Auflagetisches in der Anfangsposition (durchgehende Linie) sowie in der Endposition (gestrichelte Linie);

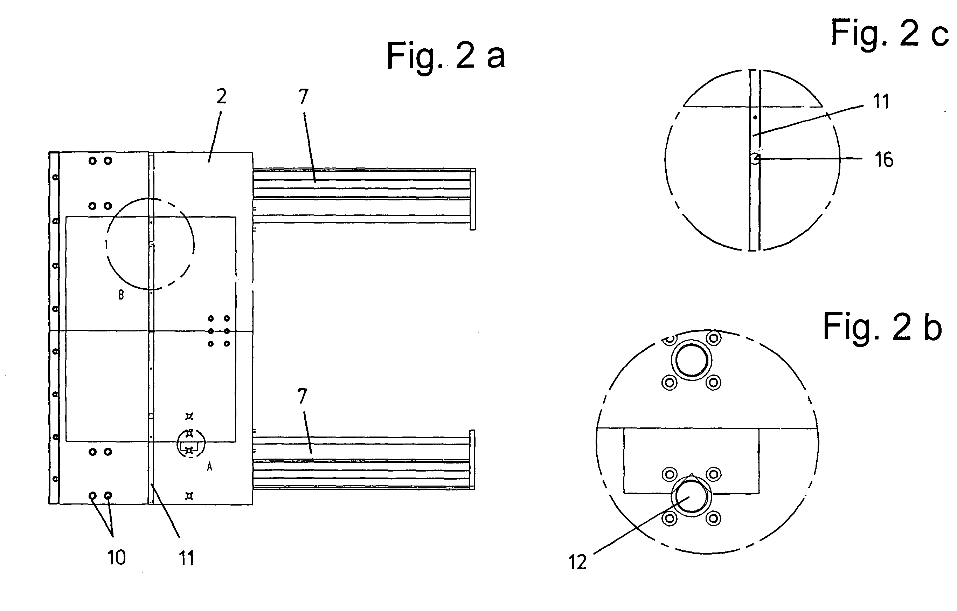

- Fig. 2a: eine Draufsicht auf den Auflagetisch in Fig. 1 in verkleinertem Maßstab;
- Fig. 2b: ein Detailausschnitt in Fig. 2a im Bereich B;
- Fig. 2c: ein Detailausschnitt in Fig. 2a im Bereich A;
- Fig. 3: eine Seitenansicht entsprechend der in Fig. 1, jedoch mit gekipptem Auflagetisch sowie mit darauf befindlichem Werkzeug;
- Fig. 4: eine Frontansicht des portalartigen Hebetisches in der 0°-Schwenkstellung;

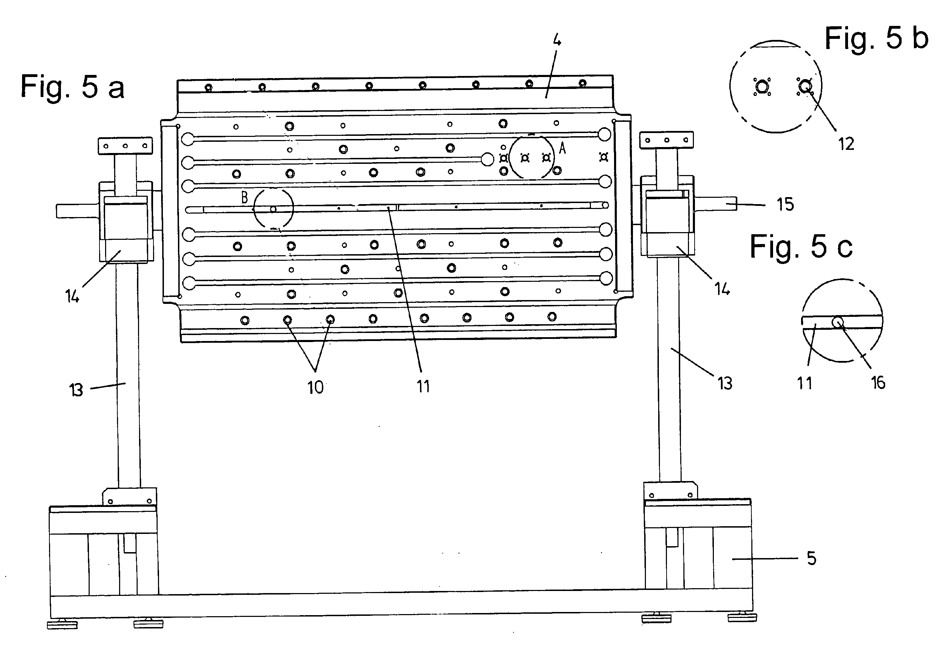

- Fig. 5a: der Hebetisch in Fig. 4, jedoch in 90°-Schwenkstellung;
- Fig. 5b: ein Detailausschnitt in Fig. 5a im Bereich A;
- Fig. 5c: ein Detailausschnitt in Fig. 5a im Bereich B;
- Fig. 6: der Hebetisch der Fig. 4 und 5a, jedoch in der 180°-Schwenkstellung sowie zusätzlich mit angedeutetem Auflagetisch sowie Werkzeug.

Die Vorrichtung zum Bereitstellen von zweiteiligen Werkzeugen 1 aus zwei Werkzeughälften 1', 1" für Arbeiten an diesen Werkzeughälften 1', 1" außerhalb der - nicht dargestellten - Werkzeugmaschine weist zwei Komponenten auf, nämlich zum einen einen Auflagetisch 2 samt Gestell 3 sowie weiterhin einen Hebetisch 4 mit einem portalartigen Gestell 5. Die beiden Komponenten sind fest miteinander verbunden und nur zum Zwecke des Transportes lösbar.

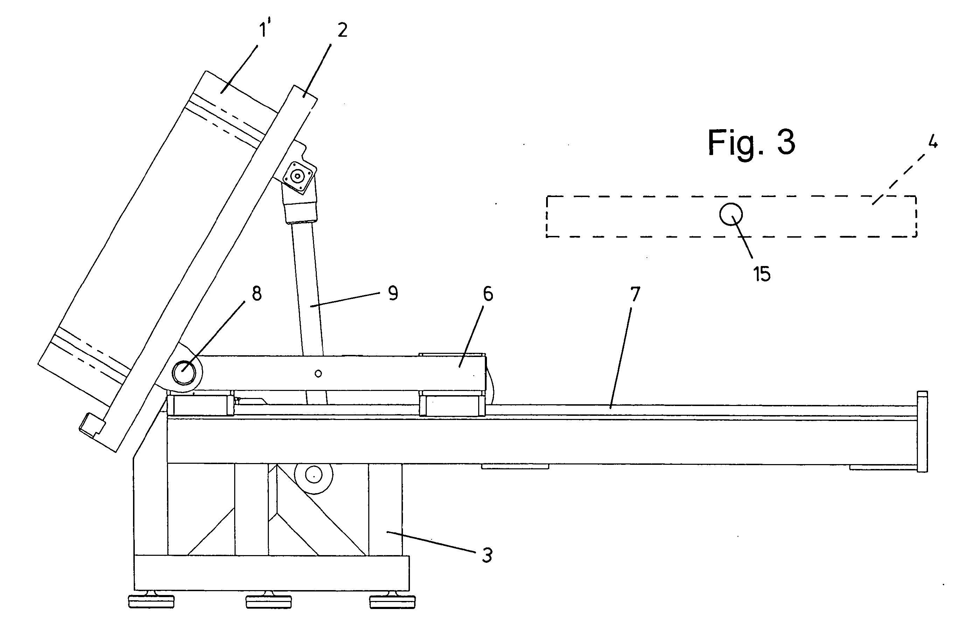

Der Auflagetisch 2 ist auf einem Schlitten 6 angeordnet. Dieser Schlitten 6 ist auf Schienen 7 des Gestells 3 längsverschiebbar. Außerdem ist der Auflagetisch 2 bezüglich des Schlittens 6 um eine horizontale Achse 8 mittels einer Gewinde-Hub-Einheit 9 kippbar (Fig. 3).

Auf der Oberseite des Auflagetisches 2 befindet sich eine Zentriereinrichtung für die Werkzeuge 1 bzw. speziell für die untere Werkzeughälfte 1'. Hierfür sind zunächst Gleitelemente 10 in Form von gefederten Kugeldruckstücken vorgesehen. Für die eigentliche Zentriereinrichtung ist eine Zentriernut 11 vorgesehen, welche sich in etwa in Querrichtung des Auflagetisches 2 erstreckt. Außerdem ist auf der Oberseite des Auflagetisches 2 ein Anschlag 12 vorgesehen.

Der Hebetisch 4 ist an zwei vertikalen Führungssäulen 13 zwischen einer unteren Position und einer oberen Position mittels eines einer entsprechenden Verfahreinrichtung 14 vertikal verfahrbar. Außerdem ist der Hebetisch 4 um eine Achse 15 drehbar. Auch der Hebetisch 14 weist eine Zentriereinrichtung mit Kleinelementen 10, einer Zentriernut 11 sowie einem Anschlag 12 auf, wie dies schon bei dem Auflagetisch 2 beschrieben worden ist.

### Die Funktionsweise ist wie folgt:

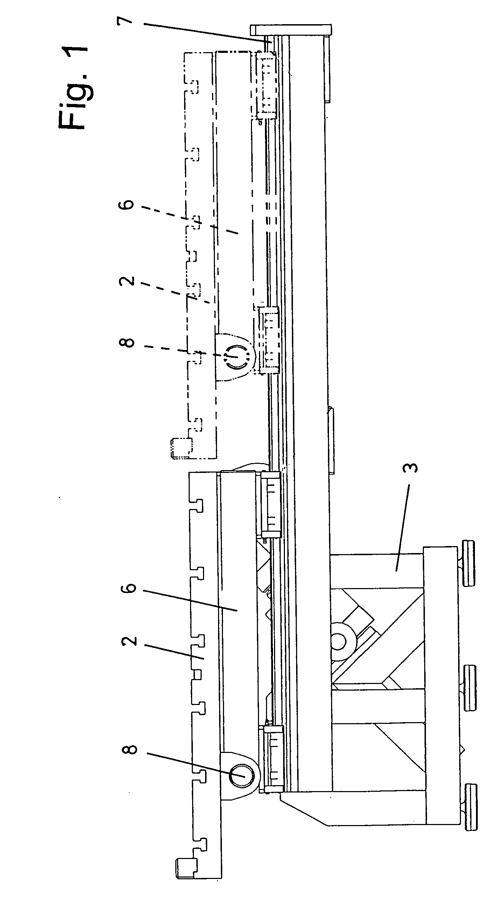

Das Werkzeug 1 wird beispielsweise einer - nicht dargestellten - Werkzeugmaschine entnommen und auf den Auflagetisch 2 aufgesetzt, welcher sich in der Ausgangsposition befindet (in Fig. 1 die Position mit der durchgezogenen Linie). Da sich der Auflagetisch 2 in dieser Ausgangsposition außerhalb des Portals für den Hebetisch 4 befindet, ist das Aufsetzen des Werkzeugs 1 auf diesen Auflagetisch 2 problemlos möglich.

Anschließend wird das Werkzeug 1 so lange von Hand verschoben, bis es die Zentrierposition eingenommen hat. Zu diesem Zweck weist die untere Werkzeughälfte 1 unterseitig federbelastete Bolzen 16 auf, welche dann in die Zentriernut 11 einrasten, wenn sie die entsprechende Position erreicht haben. Dadurch ist das Werkzeug 1 in zwei Achsen festgelegt.

Anschließend wird das Werkzeug 1 längs der Zentriernut 11 verschoben, bis es in Anlage zu dem Anschlag 12 (Fang) gelangt. In dieser Position ist das Werkzeug 1 in allen drei Achsen festgelegt. Das Werkzeug 1 kann nunmehr am Auflagetisch 2 fixiert werden.

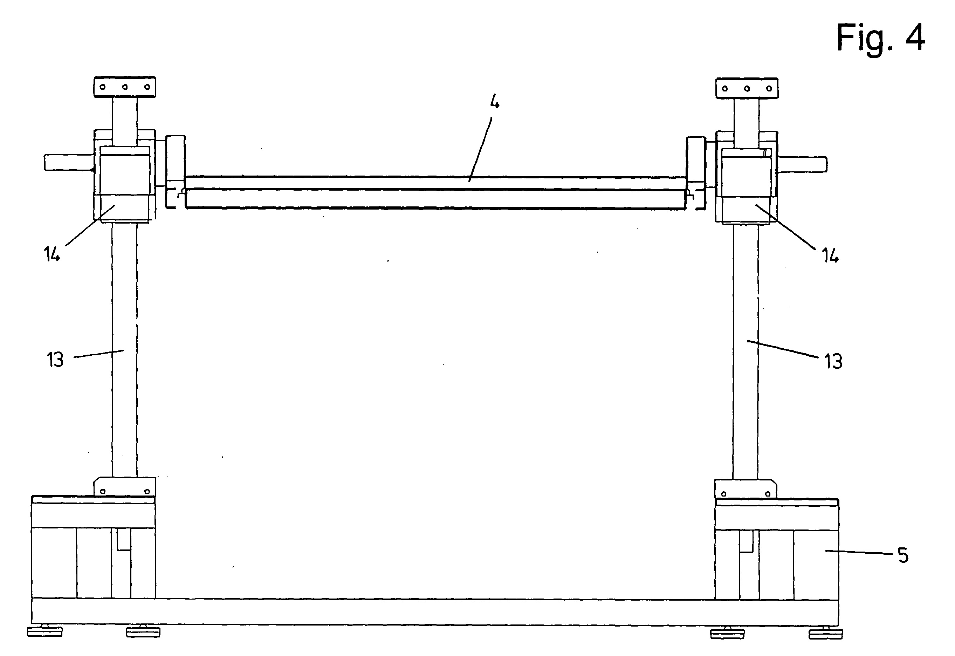

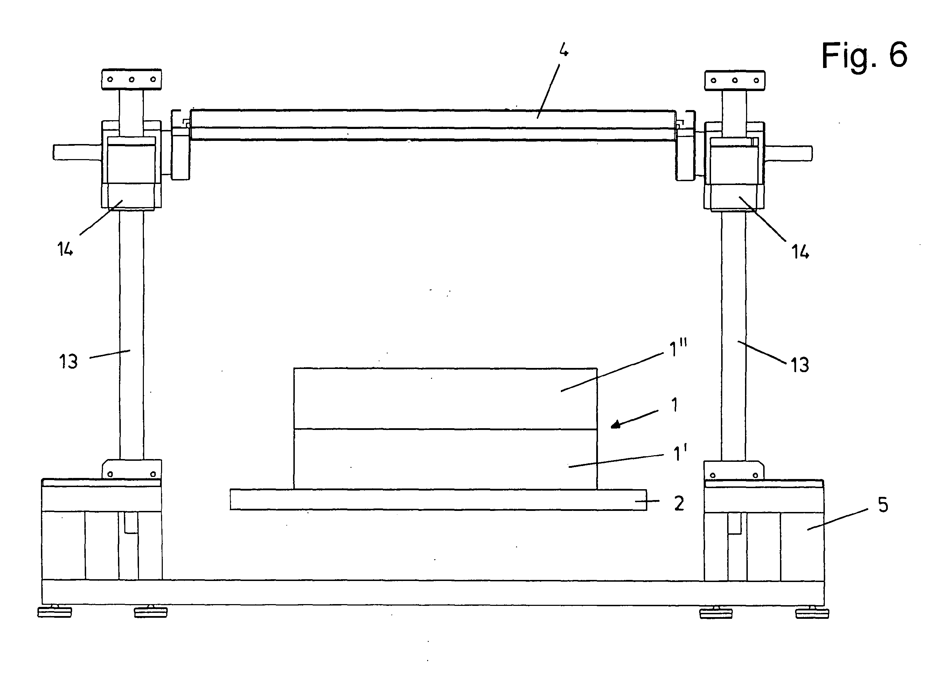

Anschließend wird das Werkzeug 1 auf seinem Auflagetisch 2 längs der Schienen 7 unterhalb des portalartigen Hebetisches 4 in eine festgelegte Endposition verfahren (in Fig. 1 die gestrichelte Linie). Anschließend wird der Hebetisch 4 aus seiner Ausgangsposition (Fig. 4) in seine 180°-Schwenkstellung (Fig. 6) gedreht und anschließend mittels der Verfahreinrichtung 14 nach unten bewegt. In dieser Position kann dann die obere Werkzeughälfte 1" mit dem Hebetisch 4 fest verbunden werden.

Schließlich wird der Hebetisch 4 nach oben verfahren, so daß die beiden Werkzeughälften 1', 1" voneinander getrennt sind. Damit die beiden Werkzeughälften 1', 1" frei zugänglich sind, wird der Auflagetisch 2 wieder in die Ausgangsposition zurückgefahren und zur Schaffung einer optimalen Bearbeitungsposition gekippt (Fig. 3). Entsprechend wird der Hebetisch 4 um seine Achse 15 gedreht, um auch hier eine ergonomisch günstige Position zu erreichen.

Nachdem die Arbeiten an den beiden Werkzeughälften 1', 1" vorgenommen worden sind, müssen diese wieder zu dem kompletten Werkzeug 1 zusammengefügt werden. Der vorbeschriebene Verfahrensablauf ist umgekehrt wie zuvor beschrieben.

### Bezugszeichenliste

- 1: Werkzeug
- 1', 1": Werkzeughälften
- 2: Auflagetisch
- 3: Gestell
- 4: Hebetisch
- 5: Gestell
- 6: Schlitten
- 7: Schiene
- 8: Achse
- 9: Gewinde-Hub-Einheit
- 10: Gleitelemente
- 11: Zentriernut
- 12: Anschlag
- 13: Führungssäule
- 14: Verfahreinrichtung
- 15: Achse
- 16: Bolzen

## Patentansprüche

1. Vorrichtung zum Bereitstellen von zweiteiligen Werkzeugen (1) für Arbeiten an diesen Werkzeugen (1) außerhalb der Werkzeugmaschine,
**dadurch gekennzeichnet,**
**daß** ein Auflagetisch (2) für das aus den beiden Werkzeughälften (1', 1") zusammengesetzte, komplette Werkzeug (1) vorgesehen ist, auf dem das Werkzeug (1) mit seiner unteren Werkzeughälfte (1') zentriert anordenbar ist, und
**daß** oberhalb des Auflagetisches (2) ein vertikal verfahrbarer Hebetisch (4) vorgesehen ist, an dem unterseitig die obere Werkzeughälfte (1") zentriert fixierbar ist.

2. Vorrichtung nach dem vorhergehenden Anspruch,
**dadurch gekennzeichnet,**
**daß** der Auflagetisch (2) Gleitelemente (10) aufweist, auf denen das Werkzeug (1) von Hand in der Horizontalen verfahrbar aufliegt.

3. Vorrichtung nach einem der vorhergehenden Ansprüche,
**dadurch gekennzeichnet,**
**daß** der Auflagetisch (2) in der Horizontalen linear verfahrbar ist.

4. Vorrichtung nach einem der vorhergehenden Ansprüche,
**dadurch gekennzeichnet,**
**daß** der Auflagetisch (2) um eine horizontale Achse (8) verschwenkbar ist.

5. Vorrichtung nach einem der vorhergehenden Ansprüche,
**dadurch gekennzeichnet,**
**daß** der Hebetisch (4) zusammen mit seiner vertikalen Verfahreinrichtung (14) portalartig oberhalb des Auflagetisches (2) angeordnet ist.

6. Vorrichtung nach einem der vorhergehenden Ansprüche,
**dadurch gekennzeichnet,**
**daß** der Hebetisch (4) um eine horizontale Achse (15) drehbar ist.

7. Vorrichtung nach einem der vorhergehenden Ansprüche,
**dadurch gekennzeichnet,**
**daß** zum Zentrieren des Werkzeugs (1) bzw. der Werkzeughälften (1', 1") der Auflagetisch (2) und/oder der Hebetisch (4) eine Zentriernut (11) aufweist,
**daß** die entsprechende Werkzeughälfte (1', 1") wenigstens zwei federbeaufschlagte Bolzen (16) aufweist, welche in die Zentriernut (11) einrasten, und
**daß** der Auflagetisch (2) und/oder der Hebetisch (4) einen Anschlag (12) für die entsprechende Werkzeughälfte (1', 1") beim Verschieben dieser Werkzeughälfte (1', 1") längs der Zentriernut (11) aufweist.
